# EUROPÄISCHE PATENTSCHRIFT

(11) **EP 1 133 933 B1**
(45) Veröffentlichungstag und Bekanntmachung des Hinweises auf die Patenterteilung: **26.02.2003**
(21) Anmeldenummer: 00113285.1
(22) Anmeldetag: 21.06.2000
(51) Int. Cl.: A43B 5/14, B62M 3/08

(54) **Fahrradschuhsohle**
Sole for cycling shoe
Semelle pour chaussure de cyclisme

(30) Priorität: 16.03.2000 DE 10012900
(43) Veröffentlichungstag der Anmeldung: 19.09.2001
(73) Patentinhaber: Gorgos, Evelyn, 83620 Westerham (DE)
(72) Erfinder: Heine, Götz, 87719 Mindelheim (DE)
(74) Vertreter: Heinze, Ekkehard, Dipl.-Phys. Dr.

(56) Entgegenhaltungen:
- WO-A-95/18551
- DE-A- 3 135 345
- FR-A- 2 405 037
- FR-A- 2 762 972

## Beschreibung

Die Erfindung betrifft eine Fahrradschuhsohle nach dem Oberbegriff des Anspruchs 1 sowie weiterhin eine entsprechende Pedalplatte zur Befestigung an einer solchen, ein Zwischenstück zur Einfügung in eine solche sowie einen Fahrradschuh mit einer solchen Fahrradschuhsohle.

Im Radrennsport kommen seit Jahren Pedal-Schuh-Anordnungen zum Einsatz, bei denen das Pedal und die Schuhsohle zueinander korrespondierende Eingriffsmittel zur Fixierung des Schuhs am Pedal aufweisen. Hierfür gibt es verschiedene Systeme, die aber bestimmte Gemeinsamkeiten aufweisen. Diese bestehen im Vorsehen einer Pedalplatte mit einer an die pedalseitigen Eingriffsmittel, speziell Haken bzw. Rastmittel, angepaßten Gestalt und einer derartigen Ausführung der Eingriffsmittel, daß eine Festlegung des Schuhs relativ zum Pedal in Längsrichtung erfolgt.

Bei den bekannten Systemen ist die Pedalplatte in einer solchen Position an der Schuhsohle angebracht, daß nach der Verriegelung mit dem Pedal die Pedalachse auf Höhe des Großzehengrundgelenkes des Trägers des Fahrradschuhs liegt.

Durch diese Anordnung ist zugleich festgelegt, daß das Großzehengrundgelenk beim Treten gemeinsam mit der Pedalachse eine Kreisbahn um die Tretlagerachse beschreibt.

Im Ergebnis von biomechanischen Überlegungen und Untersuchungen des Erfinders wurde die Erkenntnis gewonnen, daß speziell zum Befahren von Anstiegen diese Geometrie nicht optimal ist. Der Erfinder ist insbesondere zur Erkenntnis gelangt, daß ein effizienterer Einsatz der Oberschenkelmuskulatur (insbesondere beim Fahren unter höherer Last, also etwa beim erwähnten Befahren von Anstiegen) dann möglich wird, wenn bei Pedalstellungen vor der die Tretlagerachse enthaltenen Vertikalebene (in Fahrtrichtung) ein längerer Kraftarm (Hebel) wirkt.

Zur technischen Umsetzung dieser Erkenntnis wurde eine Pedalkonstruktion vorgeschlagen, bei der die Pedalachse ein Pleuel trägt, an dem dann die erwähnten pedalseitigen Eingriffsmittel angeordnet sind. Durch diesen Aufbau wird erreicht, daß der Kreisbahnbewegung der (primären) Pedalachse um die Tretlagerachse eine zusätzliche Kreisbahnbewegung des - im Grunde nur noch durch die Eingriffsmittel gebildeten - Pedals um die Pedalachse überlagert ist. In der Superposition dieser Bewegungen ergibt sich effektiv ein variabler Hebelarm des Pedals in der oben skizzierten Weise.

Diese Lösung wird in der Praxis eingesetzt, ist aber konstruktiv relativ aufwendig und daher kostspielig und hat sich zudem für viele Fahrer als gewöhnungsbedürftig erwiesen.

Aus der WO-A-95 18551 ist ein Fahrradschuh bekannt, dessen Sohle ein Verbindungselement zur Verbindung mit einem Fahrradpedal aufweist. Die Verbindungsmittel sind derart ausgebildet und angebracht, dass sie die auf den Fuß einwirkenden Druck- und Zugkräfte bei der Pedalbetätigung in dem Bereich des Fußes unterhalb der tarsalen und metatarsalen Knochen aufnehmen. Konstruktiv sind im Mittelteil der Unterseite der Schuhsohle Ausnehmungen zur Aufnahme von Bolzen zur Befestigung einer Pedalplatte mit der Sohle vorgesehen. Es wird der Einsatz einer Pedalplatte des "Look"-Systems vorgeschlagen.

Der Erfindung liegt daher die Aufgabe zugrunde, eine Anordnung zur technischen Umsetzung der erwähnten biomechanischen Erkenntnis anzugeben, die konstruktiv einfach und somit kostengünstig realisierbar ist und eine hohe Nutzerakzeptanz genießt.

Diese Aufgabe wird durch eine Fahrradschuhsohle mit den Merkmalen eines der Ansprüche 1, 2 oder 5 gelöst. Die Erfindung schließt den grundlegenden Gedanken ein, aufbauend auf der erwähnten Erkenntnis der Vorteilhaftigkeit einer Fußbewegung mit gegenüber der Tretlagerachse nach vorn verlegtem Zentrum - und damit bezüglich der Tretlagerachse nichtkonstanten Hebelarm - am Schuh selbst statt am Pedal angeordnete Mittel zur Realisierung einer solchen Bewegung anzugeben.

Sie schließt weiter den Gedanken ein, hierzu einen Versatz der schuhseitigen Eingriffsmittel gegenüber der bei den bekannten Systemen festgelegten Normalposition nach hinten, also zur Ferse hin, vorzusehen. Dieser Versatz liegt insbesondere im Bereich zwischen 20 und 60 mm und in einer biomechanisch bevorzugten Ausführung zwischen 35 und 45 mm.

Er wird in einer besonders zweckmäßigen Ausführung durch ein entsprechendes Nach-Hinten-Versetzen der Eingriffsmittel zur Befestigung der Pedalplatte an der Schuhsohle gegenüber demjenigen Bereich der Schuhsohle erreicht, der zur Aufnahme des Großzehengrundgelenkes bzw. Ballens ausgebildet ist.

Bei einem an sich bekannten System zur Befestigung der Pedalplatte an der Schuhsohle, welches drei in einem gleichseitigen Dreieck angeordnete Bohrungen umfaßt, sind hierbei sämtliche Bohrungen gegenüber dem der Mitte des Großzehengelenkes entsprechenden Punkt an der Schuhsohle nach hinten versetzt. In ähnlicher Weise sind bei weiteren Befestigungssystemen, die längsgerichtete Nuten in der Schuhsohle und eine unter diesen angeordnete Widerlagerplatte mit Gewindebohrungen umfassen, die Nuten und die Widerlagerplatte bzw. die Bohrungen in dieser ebenfalls gegenüber dem der Mitte des Großzehengelenkes entsprechenden Punkt nach hinten versetzt.

Bei einem weiteren bekannten Fahrradschuh-Pedalplatten-System, bei dem die Pedalplatte über ein Zwischenstück (ein sogenanntes Interface), das in einer entsprechend geformten Ausnehmung der Schuhsohle angebracht ist, befestigt wird, gelten diese Angaben anstelle der Schuhsohle selbst für das erwähnte Zwischenstück.

Eine sichere und dauerhaft feste Fixierung der Pedalplatte in dem vorgeschlagenen Bereich wird insbesondere durch eine nach der Innenseite hin gerichtete Verbreitung der Sohle ermöglicht. Gebräuchliche Schuhsohlenkonturen, die weitgehend der Fußsohlenkontur folgen und mitunter (aus ästhetischen Gründen) sogar eine stärkere Verengung im mittleren Bereich als die Fußsohle selbst aufweisen, bieten nur bedingt die Möglichkeit, die Pedalplatte im vorgeschlagenen Bereich symmetrisch zur Schuhlängsachse sicher zu befestigen. Ein nennenswertes Versetzen gegenüber der Schuhlängsachse zur Außenseite hin kommt nicht in Betracht, weil der Fuß dann zu nahe am Pedalarm stehen würde.

Die hiermit vorgeschlagene Verbreiterung der Schuhsohle ist mindestens in einem Bereich vorzusehen, in dem die versetzten Eingriffsmittel der bekannten Systeme zur Fixierung der Pedalplatte an der Schuhsohle angeordnet sind, erstreckt sich also mindestens über einen Teilabschnitt des mittleren Drittels der Längserstreckung der Schuhsohle.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
- Fig. 1: eine Skizze (Untersicht) einer Fahrradschuhsohle mit angeschraubter Pedalplatte gemäß einer ersten Ausführungsform der Erfindung,
- Fig. 2: eine Skizze (Untersicht) einer Fahrradschuhsohle gemäß einer zweiten Ausführungsform der Erfindung, ohne Pedalplatte, und
- Fig. 3: eine Skizze (Untersicht) einer Fahrradschuhsohle mit eingefügten Interface, das eine Pedalplatte trägt, gemäß einer dritten Ausführungsform der Erfindung.

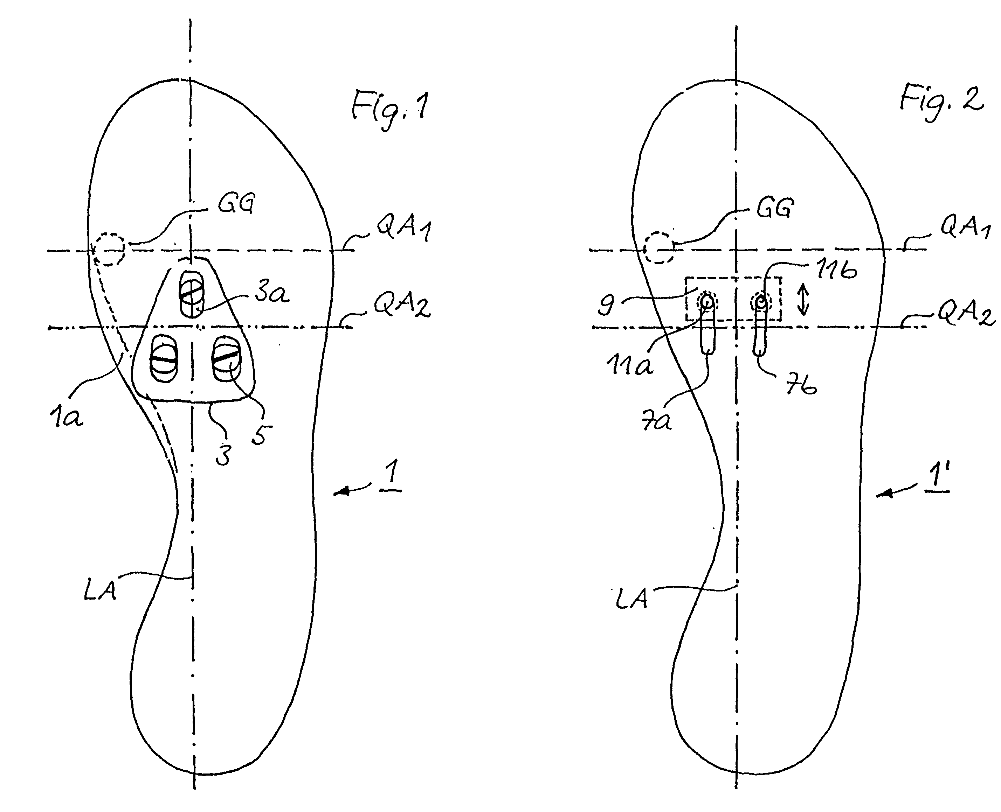

Fig. 1 zeigt als schematische Prinzipdarstellung (nicht maßstäblich) eine Fahrradschuhsohle 1 für einen Rennradschuh, an der mittels Schrauben 5 eine Pedalplatte 3 angeschraubt ist, die an ein Rennpedal mit zwei Verriegelungshaken angepaßt ist.

Wesentliche geometriebestimmende (gedachte) Achsen der Fahrradschuhsohle 1 sind eine bei mit dem Pedal korrekt verriegeltem Schuh parallel zur vertikalen Rahmenebene verlaufende und die größte Längserstreckung der Schuhsohle markierende "Längsachse" LA, eine hierzu senkrechte erste Querachse QA₁, auf der das Großzehengrundgelenk des Trägers des Schuhs liegt, und eine zweite Querachse QA₂, auf der der Mittelpunkt der Längserstrekkung der Pedalplatte liegt und die im mit dem Pedal verriegelten Zustand der Schuhsohle die Lage der Pedalachse markiert.

Die Pedalplatte 3 mit einer abgerundet dreieckigen Grundgestalt hat drei Langlöcher 3a zum Einsetzen der Schrauben 5, die in (nicht dargestellte) Gewindebohrungen in der Sohle 1 eingreifen, und ist mittels der Langlöcher um einen bestimmten Betrag gegenüber der Schuhsohle längs verschieblich.

Charakteristisch für die dargestellte Ausführungsform ist zum einen, daß die zweite Querachse QA₂ gegenüber der das Großzehengrundgelenk GG markierenden ersten Querachse QA₁ um ca. 40 mm zur Ferse nach hinten versetzt positioniert ist, indem die Gewindebohrungen für die Schrauben 5 gegenüber einer herkömmlichen Schuhsohle um den entsprechenden Betrag versetzt angeordnet sind. Zum anderen weist die Schuhsohle am Innenrist gegenüber der Kontur einer herkömmlichen Schuhsohle (in der Figur kurz gestrichelt gezeichnet) eine Verbreiterung 1a auf. Diese sichert, daß um die nach hinten versetzte innenrißseitige Gewindebohrung herum noch genügend Sohlenmaterial angeordnet ist, um ein Ausreißen auch unter hoher Belastung sicher zu verhindern, und daß der dort angeordnete Eckbereich der Pedalplatte 3 eben auf der Schuhsohle aufliegt.

Fig. 2 zeigt eine gegenüber der ersten Ausführung modifizierte Fahrradschuhsohle 1', bei der ein anderes - an sich bekanntes - Befestigungssystem für die (hier nicht dargestellte) Pedalplatte realisiert ist. Dieses System umfaßt zwei zueinander und zur Längsachse LA parallele Nuten bzw. Schlitze 7a, 7b, hinter denen eine im Inneren der Sohle 1' längsverschieblich angeordnete Widerlagerplatte 9 mit zwei Gewindebohrungen 11a, 11b angeordnet ist. Die (ebenfalls nicht dargestellten) Befestigungsschrauben für die Pedalplatte durchgreifen die Nuten 7a, 7b und werden in die Gewindebohrungen 11a, 11b eingedreht. Durch entsprechenden Anzug werden die Pedalplatte und die Widerlagerplatte mit dem Schuhsohlenmaterial dazwischen kraftschlüssig - verriegelt, während nach Lösen des Anzuges die Pedalplatte in Sohlenlängsrichtung verschieblich ist.

Für die hier gezeigte Sohle 1' gelten die bei der ersten Ausführungsform erläuterten geometrischen Verhältnisse analog; insbesondere sind die Nuten 7a, 7b und entsprechend die Widerlagerplatte 9 gegenüber einer bekannten Anordnung um 35 - 45 mm zur Ferse hin ersetzt, was zu einer entsprechenden Verschiebung der zweiten Querachse QA₂ gegenüber der ersten Querachse QA₁ führt. Eine Sohlenverbreiterung ist bei dieser Ausführung nicht gezeigt, um zu verdeutlichen, daß diese nicht in jedem Fall erforderlich ist. Speziell durch eine an den herkömmlichen Sohlenverlauf angepaßte Formgebung der Pedalplatte kann deren sichere Abstützung auf der Schuhsohle gegebenenfalls auch bei unveränderter Sohlenform erreicht werden.

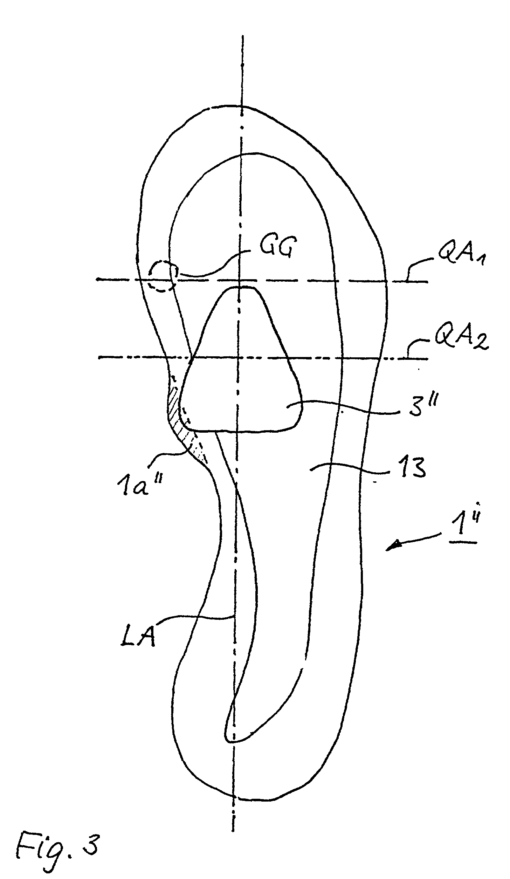

In Fig. 3 ist als weitere Ausführungsform der Erfindung eine Fahrradschuhsohle 1" mit einem als "Interface" bezeichneten, in die Sohle eingefügten Zwischenstück 13 gezeigt, an dem bei dieser Konstruktion eine modifizierte Pedalplatte 3" angebracht ist. Die Art und Weise der Anbringung der Pedalplatte 3" am Zwischenstück 13 ist hier nicht näher dargestellt; sie kann durch Schrauben oder Stifte ebenso erfolgen wie gegebenenfalls auch durch Verkleben oder durch mit dem Zwischenstück einstükkiger Ausformung, beispielsweise als materialeinheitliches Spritzgußteil.

Bei der Fahrradschuhsohle 1" ist im Bereich der Pedalplatte 3" wieder eine innenristseitige Verbreiterung 1a" vorgesehen, diese ist aber enger begrenzt als bei der Ausführung nach Fig. 1 ausgeformt.

Die Ausführung der Erfindung ist nicht auf die hier beschriebenen Beispiele und die bekannten Systeme zur Befestigung einer Pedalplatte an einer Fahrradschuhsohle - ohne oder mit Interface - beschränkt, sondern ebenso in einer Vielzahl von Abwandlungen möglich, die im Rahmen fachmännischen Handelns liegen.

### Bezugszeichenliste

- 1; 1'; 1": Fahrradschuhsohle
- 1a; 1a": Verbreiterungsbereich
- 3; 3": Pedalplatte
- 3a: Langloch
- 5: Schraube
- 7a, 7b, 7c: Nut (Schlitz)
- 9: Widerlagerplatte
- 11a, 11b: Gewindebohrung
- 13: Zwischenstück ("Interface")
- GG: Großzehengrundgelenk
- LA: Längsachse
- QA₁, QA₂: Querachse

## Patentansprüche

1. Fahrradschuhsohle mit einer an ein Fahrradpedal mit Fixierungsmitteln angepaßten Pedalplatte,
**dadurch gekennzeichnet, daß**
die der Lage einer Pedalachse des Fahrradpedals entsprechende Linie an der Pedalplatte gegenüber dem der Mitte des Großzehengrundgelenkes entsprechenden Punkt an der Fahrradschuhsohle um 20 bis 60 mm nach hinten versetzt ist.

2. Fahrradschuhsohle mit Eingriffsmitteln, insbesondere Bohrungen und/oder Nuten, zur Befestigung einer an ein Fahrradpedal mit Fixierungsmitteln angepaßten Pedalplatte,
**gekennzeichnet durch**
eine derartige Anordnung der Eingriffsmittel, daß im befestigten Zustand der Pedalplatte die der Lage einer Pedal-achse des Fahrradpedals entsprechende Linie an der Pedalplatte gegenüber dem der Mitte des Großzehengrundgelenkes entsprechenden Punkt an der Fahrradschuhsohle um 20 bis 60 mm nach hinten versetzt ist bzw. im mittleren Drittel der Längserstreckung der Fahrradschuhsohle liegt.

3. Fahrradschuhsohle nach Anspruch 2,
**gekennzeichnet durch**
drei in Dreieckskonfiguration, insbesondere als gleichseitiges Dreieck, angeordnete Bohrungen, welche alle gegenüber dem der Mitte des Großzehengrundgelenkes entsprechenden Punkt an der Fahrradschuhsohle nach hinten versetzt sind.

4. Fahrradschuhsohle nach Anspruch 2,
**gekennzeichnet durch**
zwei zueinander und im wesentlichen zur Längsachse der Fahrradschuhsohle parallele Nuten, unter denen im Inneren der Fahrradschuhsohle eine Widerlagerplatte mit Gewindebohrungen verschieblich angeordnet ist, wobei die vorderste einstellbare Position der Gewindebohrungen in den Nuten gegenüber dem der Mitte des Großzehengrundgelenkes entsprechenden Punkt an der Fahrradschuhsohle nach hinten verschoben ist.

5. Fahrradschuhsohle mit einer langgestreckten Ausnehmung und einem in diese fest einzufügenden Zwischenstück mit Eingriffsmitteln, insbesondere Bohrungen und/oder Nuten, zur Befestigung einer an ein Fahrradpedal mit Fixierungsmitteln angepaßten Pedalplatte,
**gekennzeichnet durch**
eine derartige Anordnung der Eingriffsmittel, daß im befestigten Zustand der Pedalplatte die der Lage einer Pedal-achse des Fahrradpedals entsprechende Linie an der Pedalplatte gegenüber dem der Mitte des Großzehengrundgelenkes entsprechenden Punkt an der Fahrradschuhsohle um 20 bis 60 mm nach hinten versetzt ist bzw. im mittleren Dritten der Längserstreckung der Fahrradschuhsohle liegt.

## Claims

1. Bicycle shoe sole comprising a pedal cleat designed to cling to a clipless pedal
**characterized in**
**that** way the position of the pedal's axle underneath the sole in comparison to the point representing the centre of the metatarsal joint is dislocated backwards by 20 to 60mms.

2. Bicycle shoe sole with elements of intervention, especially threaded holes and/or slots to attach a pedal cleat designed to cling to a clipless pedal
**characterized by**
an arrangement of elements of intervention that once the cleat has clung the position of the pedal's axis centreline at the cleat corresponding to the point representing the centre of the metatarsal joint is moved backwards by 20 to 60mms, respectively is situated in the middle third of the longitudinal extension of the bicycle shoe sole.

3. Bicycle shoe sole according to claim 2
**characterized by**
three threaded holes situated in a triangle configuration, in particular as an equilateral triangle which in comparison to the point representing the centre of the metatarsal joint are all dislocated backwards.

4. Bicycle shoe sole according to claim 2
**characterized by**
two elongated slots, as well parallel to each other as to the longitudinal axis of the bicycle shoe sole, on the sole's inside containing a lengthwise adjustable retention plate with threaded holes, in their foremost adjustable position are moved backwards in relation to the point representing the centre of the metatarsal joint on the bicycle shoe sole.

5. Bicycle shoe sole with an extensive gap and an interface which has to be firmly fastened into this gap comprising elements of intervention, in particular threaded holes and/or slots to attach cleats designed to cling to a clipless pedal
**characterized by**
such a positioning of the means of intervention that once the cleat is attached, a line through it in relation to the point representing the centre of the metatarsal joint is moved backwards by 20 to 60mms, respectively is situated in the middle third of the bicycle shoe sole.

## Revendications

1. Semelle de chaussure de vélo comprenant une cale de pédale désignée à s'enclencher à une pédale automatique
**caractérisée par**
la manière de l'axe de la pédale en dessous de la semelle, en comparaison avec le point représentant l'articulation du métatarse reculé de 20 à 60 mm.

2. Semelle de chaussure de vélo avec les éléments d'intervention, en particulier les orifices taraudés et/ou les logements allongés, pour fixer la cale d'une pédale désignée à s'enclencher à un pédale automatique
**caractérisée par**
un ensemble d'éléments d'intervention qui, une fois que la cale s'est positionnée sur l'axe de la pédale, la ligne centrale à la cale correspondante au point représentant le centre de l'articulation du métatarse qui est reculé de 20 à 60 mm, est situé respectivement dans le tiers du milieu de l'extension longitudinale de la semelle de chaussure de vélo.

3. Semelle de chaussure de vélo selon la revendication numéro 2,
**caractérisée par**
trois orifices taraudés, situés dans une configuration triangulaire, laquelle en comparaison avec le point représentant le centre de l'articulation du métatarse, sont tous déplaces vers l'arrière.

4. Semelle de chaussure de vélo selon la revendication numéro 2,
**caractérisée par**
deux logements allongés, parallèle entre eux, comme parallèle à l'axe longitudinal de la semelle de chaussure de vélo, sur l'intérieur de la semelle comprenant un plaque à trois orifices de rétention taraudés ajustable en longueur, dans leur position ajustable le plus en avant, sont déplacés en arrière en relation avec le point représentant le centre de l'articulation du métatarse sur la semelle de chaussure.

5. Semelle de chaussure de vélo avec un large espace et une interface, laquelle doit être fermement attachée dans cet espace, comprenant les éléments d'intervention, en particulier des orifices taraudés et/ou des logements allongés, pour attacher les cales, désignées à s'emboîter à une pédale automatique,
**caractérisées par**,
un tel positionnement des moyens d'intervention qui, une fois que la cale est attachée, une ligne à travers celle-ci, en relation avec le point représentant le centre de l'articulation du métatarse, est reculé de 20 à 60 mm, ou bien est situé dans le tiers du milieu de la semelle de chaussure de vélo.
